# EUROPEAN PATENT SPECIFICATION

(11) **EP 0 532 086 B1**
(45) Date of publication and mention of the grant of the patent: **24.05.1995**
(21) Application number: 92202634.9
(22) Date of filing: 01.09.1992
(51) Int. Cl.: A23G 3/00, A23G 1/00, A23D 9/00, C11B 7/00

(54) **Non-hydrogenated coating fat**
Nicht-hydriertes Beschichtungsfett
Graisse de revêtement non-hydrogénée

(30) Priority: 10.09.1991 EP 91202299
(43) Date of publication of application: 17.03.1993
(73) Proprietor: UNILEVER N.V., 3013 AL Rotterdam (NL); UNILEVER PLC, London EC4P 4BQ (GB)
(72) Inventor: Cain, Frederick William, NL-2271 VL Voorburg (NL); Hughes, Adrian David, NL-2513 BR Den Haag (NL)
(74) Representative: Sikken, Antonius H. J. M.

(56) References cited:
- EP-A- 0 115 655
- EP-A- 0 256 760
- GB-A- 2 201 878
- US-A- 3 174 868
- US-A- 4 533 561
- JOURNAL OF THE AMERICAN OIL CHEMISTS' SOCIETY vol. 62, no. 2, 1985, pages 426 -430 J.J. PEASE 'CONFECTIONERY FATS FROM PALM OIL AND LAURIC OIL'
- JOURNAL OF THE AMERICAN OIL CHEMISTS' SOCIETY vol. 62, no. 2, 1985, pages 385 -390 J.B. ROSSELL 'FRACTIONATION OF LAURIC OILS'

## Description

In the art of chocolate production, one of the main problems to be overcome was that of the contraction and demoulding of chocolate products produced in a mould. A requirement for a good product and a good production method is that the product does not suffer loss of shape after it has been removed from the mould (= contraction) while the demoulding procedure should not lead to damage of the demoulded product.

In the past, this problem was tackled by using a coating layer for the confectionery product containing hydrogenated fat fractions, such as a hydrogenated palm kernel fraction.

From J. Am. Oil Chem. Soc. 62 (1985), p. 385-389 it is known to use re-fractionated palm kernel stearin fractions in chocolate coatings. The N₃₀-values of those fractions are rather high (about 60, according to Table II), its advantage is given a "better finger point resistance". It is expressed, however, that hydrogenated palm kernel stearin has several advantages over the others.

Although the use of hydrogenated products alleviated the demoulding and contraction problems to some extent, it also meant that hydrogenation had to be carried out. Hydrogenation always involves the production of some trans products owing to isomerization occurring during hydrogenation, as illustrated by the formation of elaidic acid. Trans products, however, are less appreciated as they behave like saturated products and are therefore less healthy than unsaturated products. Moreover, the contraction and demoulding problems still remained to some extent.

We have now found that fat compositions, that can be obtained by fractionation steps only, can be used to prepare a fat composition suitable for application in chocolate coating while the contraction and demoulding of products containing these compositions are at least as good, compared to the products containing the hydrogenated lauric fats.

Therefore, our invention is concerned in the first place with lauric fat compositions displaying :
a) a solid fat content (NMR, stab.) of: 35 < N₃₀ < 48, preferably 40 < N₃₀ < 46;
b) an oleic acid content of 1-10 wt%, preferably of 2-8 wt.%;
c) a content of C₈-C₁₄ saturated fatty acids of 70-95 wt.%;
d) an elaidic acid content of less than 1.5 wt%.

These lauric fat compositions are advantageously obtained as a blend of palm kernel fractions.

A preferred fat composition is a blend of 25-55 wt.% of a first palm kernel stearin fraction, such as obtained by fractionation of palm kernel fat and 75-45 wt% of another palm kernel stearin fraction, such as obtained by double fractionation (or a two-step fractionation) of palm kernel fat.

The above-mentioned lauric fat compositions are excellent fats to be used for the production of non-temper, lauric fat compositions that can be used for the production of hard coatings having good contraction and demoulding characteristics.

In fact, these non-temper, lauric fat compositions comprise the lauric fat compositions mentioned above that additionally contain an amount of and preferably 1-15 wt.% of a natural fat fraction, which fraction contains at least 50 wt.% of tri-saturated glycerides (S₃), wherein S = C₁₆-C₂₄.

Preferred non-temper, lauric fat compositions are composed in such a way that on basis of the whole composition:
a) the S₃-content is 1-20 wt.%;
b) the oleic acid content is 1-15 wt.%;
c) the content of C₈-C₁₄ saturated fatty acid is 70-95 wt.%;
d) the elaidic acid content is 0-1.5 wt.%.

These compositions display a solid fat content (NMR, stab.) of N₃₀ = 35-48.

In these compositions the natural fat is preferably a palm oil stearin fraction.

Another aspect of our invention is the use of these new non-temper, lauric fat compositions in order to produce a hard coating that has good contraction and demoulding characteristics.

Also confectionery products containing at least an amount of the non-temper, lauric fats and chocolate coatings, wherein at least an amount of these fats is present, are part of the invention.

The invention will now be illustrated by the following, non-limiting Examples:

### EXAMPLE I

The following fats were prepared :
A : Palm kernel fat was dry-fractionated and the stearin fraction was collected. This stearin fraction was hydrogenated to 34°C. This fraction is fat A, which has the following N-profile :

| | |
|---|---|
| N₂₀ | 94.5 |
| N₂₅ | 87.0 |
| N₃₀ | 42.5 |
| N₃₅ | 3.0. |

Slip melting point: 34°C
B. The stearin fraction before hydrogenation mentioned above is fat B. The N-profile of this stearin fraction was:

| | |
|---|---|
| N₂₀ | 82.0 |
| N₂₅ | 66.5 |
| N₃₀ | 29.5 |
| N₃₅ | 0.1. |

Slip melting point : 32°C.
C. Stearin fraction B was dry-fractionated once more. The stearin fraction of this second dry fractionation is fat C. This fat displayed the following N-profile :

| | |
|---|---|
| N₂₀ | 91.0 |
| N₂₅ | 81.0 |
| N₃₀ | 50.0 |
| N₃₅ | 0.0. |

Slip melting point : 33°C.
The FAME of these fats A, B and C is mentioned in Table I.

**TABLE I**

| Fat | C₈ | C₁₀ | C₁₂ | C₁₄ | C₁₆ | C_{18:0} | C_{18:1} | C_{18:2} | C₂₀ |
|---|---|---|---|---|---|---|---|---|---|
| A | 1.6 | 2.7 | 54.7 | 21.1 | 8.7 | 11.0 | 0.5 | - | 0.2 |
| B | 1.6 | 2.7 | 54.7 | 21.1 | 8.7 | 2.0 | 7.5 | 1.1 | 0.1 |
| C | 1.1 | 2.3 | 56.1 | 25.3 | 8.8 | 2.1 | 3.5 | 0.5 | 0.1 |

D. A blend was made of 40% of fat B and 60% of fat C; this is fat D. N₃₀= 42%; C_{18:1}= 5.1%; C₈-C₁₄=82.9%; elaidic= < 0.5%.
E. A blend was made of 38% of fat B; 57% of fat C and 5% of palm oil stearin (with 77% S₃; S=C₁₆-C₂₄).
Coatings were prepared having the following compositions:

| | |
|---|---|
| Fat | 34% |
| CC P 10/12 | 15% |
| Sugar | 48% |
| SMP | 3% |
| Lecithin | 0.4% |
| Flavour | 0.02% |

The fats used were fats A, D and E.

We have found that fats A and E showed good contraction and good demoulding characteristics. Fat D, however, showed poor contraction and poor demoulding. Bars, demoulded at 38°C showed immediate fat bloom.

Conclusion : Our non-hardened composition E is at least as good as hardened composition A and far better than blend D.

### EXAMPLE II

Example I was repeated, however, the following fats F and G were used in the chocolate coating composition given in example I.
- Fat F:: A blend of 50 wt% of fat B, 50 wt% of fat C and 5 wt% of palm oil stearin.
- Fat G:: A blend of 70 wt% of fat C, 30 wt% of fat B and 5 wt% of palm oil stearin.

It was found that the compositions containing fats B, C and the palm oil stearin (so: fats F and G) showed very good demoulding characteristics.
It was further found by evaluation by a trained taste panel that the mouthfeel and flavour release from products made from compositions, containing fat G, were similar to those of products made from the reference fat A.

## Claims

1. A non-temper, lauric fat composition, comprising
(1) a lauric fat, displaying the following characteristics:
(a) a solid fat content (NMR,stab) of: 35 < N₃₀ < 48;
(b) an oleic acid content of 1-10 wt%;
(c) a content of C₈-C₁₄ saturated fatty acids of 70-95 wt%
(d) an elaidic acid content of less than 1.5 wt%
and
(2) a fraction of a natural fat, which fraction contains at least 50 wt% of trisaturated glycerides (S₃), wherein S is C₁₆-C₂₄.

2. Non-temper, lauric fat composition according to claim 1, wherein the amount of the lauric fat (1) is 85-99 wt% and the amount of fraction (2) is 1-15 wt%.

3. Lauric fat composition according to Claim 1, wherein on basis of the whole composition:
a) the S₃-content is 1-20 wt.%;
b) the oleic acid content is 1-15 wt.%;
c) the content of C₈-C₁₄ saturated fatty acid is 70-95 wt.%;
d) the elaidic acid content is 0-1.5 wt.%.

4. Lauric fat composition according to Claims 1-3, wherein the composition displays an N₃₀ of 35-48.

5. Lauric fat composition according to Claim 1, wherein the fraction of natural fat (2) is a palm oil stearin fraction.

6. Confectionery products, wherein at least an amount of the fats according to Claims 1-5 is present.

7. Chocolate coatings, wherein at least an amount of the fats according to Claims 1-5 is present.

8. Use of non-temper, lauric fat compositions with the composition of Claims 1-5 in confectionery, wherein the compositions are used in order to produce a hard coating that has good contraction and demoulding characteristics.

## Patentansprüche

1. Keine Temperierung erfordernde Lauricfettzusammensetzung, umfassend
(1) ein Lauricfett, das die folgenden Eigenschaften zeigt:
a) einen Festfettgehalt (NMR, stab.) von: 35 < N₃₀ < 48,
b) einen Ölsäuregehalt von 1 bis 10 Gew.-%,
c) einen Gehalt an C₈-C₁₄ gesättigten Fettsäuren von 70 bis 95 Gew.-% und
d) einen Elaidinsäuregehalt von weniger als 1,5 Gew.-%
und
(2) eine Fraktion eines natürlichen Fettes, die mindestens 50 Gew.-% dreifach gesättigte Glyceride (S₃) enthält, wobei S = C₁₆-C₂₄.

2. Keine Temperierung erfordernde Lauricfettzusammensetzung nach Anspruch 1, in der die Menge an Lauricfett (1) 85 bis 95 Gew.-% beträgt und die Menge an Fraktion (2) 1 bis 15 Gew.-% beträgt.

3. Lauricfettzusammensetzung nach Anspruch 1, worin, auf der Grundlage der gesamten Zusammensetzung,
a) der S₃-Gehalt 1 bis 20 Gew.-% beträgt,
b) der Ölsäuregehalt 1 bis 15 Gew.-% beträgt,
c) der Gehalt an C₈-C₁₄ gesättigter Fettsäure 70 bis 95 Gew.-% beträgt und
d) der Elaidinsäuregehalt 0 bis 1,5 Gew.-% beträgt.

4. Lauricfettzusammensetzung nach einem der Ansprüche 1 bis 3, in der die Zusammensetzung einen N₃₀-Wert von 35 bis 48 hat.

5. Lauricfettzusammensetzung nach Anspruch 1, in der die Fraktion des natürlichen Fettes (2) eine Palmölstearinfraktion ist.

6. Süßwarenprodukte, in denen mindestens eine Menge der Fette gemäß einem der Ansprüche 1 bis 5 vorliegt.

7. Schokoladenüberzüge bzw. -beschichtungen, in denen mindestens eine Menge der Fette gemäß einem der Ansprüche 1 bis 5 vorliegt.

8. Verwendung von keine Temperierung erfordernden Lauricfettzusammensetzungen mit der Zusammensetzung gemäß einem der Ansprüche 1 bis 5 in Süßwaren, in denen die Zusammensetzungen verwendet werden, um einen harten Überzug zu ergeben, der gute Kontraktions- und Ausklopfeigenschaften hat.

## Revendications

1. Composition de graisse laurique, non humide, comprenant
(1) une graisse laurique, présentant les caractéristiques suivantes :
(a) une teneur en graisse solide (RMN, stab) de : 35 < N₃₀ < 48 ;
(b) une teneur en acide oléique comprise entre 1 % et 10 % en poids ;
(c) une teneur en acides gras saturés C₈-C₁₄ comprise entre 70 % et 95 % en poids
(d) une teneur en acide élaïdique inférieure à 1,5 % en poids
et
(2) une fraction de graisse naturelle, qui contient au moins 50 % en poids de glycérides tri-saturés (S₃), dans lesquels S est C₁₆-C₂₄.

2. Composition de graisse laurique, non humide, selon la revendication 1, dans laquelle la quantité de graisse laurique (1) est comprise entre 85 % à 99 % en poids et la quantité de la fraction (2) est comprise entre 1 % et 15 % en poids.

3. Composition de graisse laurique selon la revendication 1, dans laquelle, sur la base de la composition totale :
a) la teneur en S₃ est comprise entre 1 % et 20 % en poids ;
b) la teneur en acide oléique est comprise entre 1 % et 15 % en poids ;
c) la teneur en acide gras saturé C₈-C₁₄ est comprise entre 70 % et 95 % en poids ;
d) la teneur en acide élaïdique est comprise entre 0 % et 1,5 % en poids.

4. Composition de graisse laurique selon les revendications 1 à 3, dans laquelle la composition présente un N₃₀ de 35 à 48.

5. Composition de graisse laurique selon la revendication 1, dans laquelle la fraction de graisse naturelle (2) est une fraction de stéarine d'huile de palme.

6. Sucreries dans lesquelles est présente au moins une certaine quantité des graisses selon les revendications 1 à 5.

7. Revêtements de chocolat, dans lesquels est présente au moins une certaine quantité des graisses selon les revendications 1 à 5.

8. Utilisation dans les sucreries de compositions de graisse laurique, non humide, avec la composition des revendications 1 à 5, dans lesquelles les compositions sont utilisées afin de produire un revêtement dur qui a de bonnes caractéristiques de contraction et de démoulage.
